(19) Europäisches Patentamt
European Patent Office
Office européen des brevets

(11) **EP 3 239 471 B1**

(12) **EUROPEAN PATENT SPECIFICATION**

(45) Date of publication and mention
of the grant of the patent:
**27.05.2020 Bulletin 2020/22**

(21) Application number: **17167027.6**

(22) Date of filing: **19.04.2017**

(51) Int Cl.:
*F01D 11/00* (2006.01)   *F01D 11/02* (2006.01)
*F02C 7/28* (2006.01)   *F16J 15/44* (2006.01)

(54) **FLOATING, NON-CONTACT SEAL WITH ROUNDED EDGE**

SCHWIMMENDE, KONTAKTFREIE ABDICHTUNG MIT ABGERUNDETER KANTE

JOINT D'ÉTANCHÉITÉ FLOTTANT SANS CONTACT AVEC UN BORD ARRONDI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.04.2016 US 201615137700**

(43) Date of publication of application:
**01.11.2017 Bulletin 2017/44**

(73) Proprietor: **United Technologies Corporation Farmington, CT 06032 (US)**

(72) Inventors:
• PETERS, Christopher J.
  **West Hartford, CT Connecticut 06107 (US)**
• DUELM, Shelton O.
  **Wethersfield, CT Connecticut 06109 (US)**

(74) Representative: **Dehns**
**St. Bride's House**
**10 Salisbury Square**
**London EC4Y 8JD (GB)**

(56) References cited:
**EP-A1- 3 009 612      WO-A1-2015/147967**
**US-A1- 2014 117 624      US-A1- 2016 010 480**

**Description**

BACKGROUND

Seals are used in aircraft engines to isolate a fluid from one or more areas/regions of the engine. For example, seals control various characteristics (e.g., temperature, pressure) within the areas/regions of the engine and ensure proper/efficient engine operation and stability.

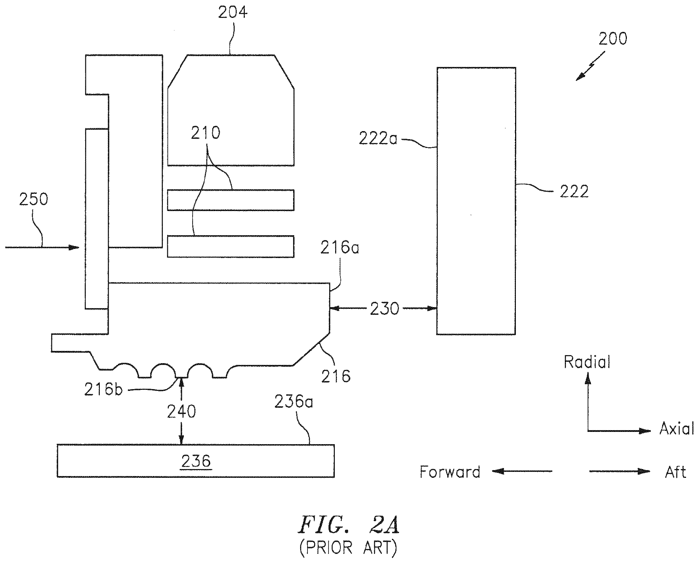

Referring to FIG. 2A, a prior art sealing system environment 200 is shown. The system 200 includes a floating, non-contact seal that is formed from a support ring 204, beams 210 coupled to the support ring 204, and a shoe 216 coupled to the beams 210 as would be known to one of skill in the art. The seal may include at least some characteristics that are common with a HALO® seal provided by, e.g., Advanced Technologies Group, Inc. of Stuart, Florida.

Aft of the seal is an adjacent support structure 222. An axial clearance 230 is defined between the aftmost face 216a (also referred to as an axial shoe face) of the shoe 216 and a forward face 222a (also referred to as a support structure face) of the support structure 222. Additionally, a radial clearance 240 may be defined between an inner face 216b (also referred to as a radial shoe face) of the shoe 216 and an outer face 236a (also referred to as a rotor face) of a rotor 236. As one skilled the art would appreciate, the shoe 216 is intended to move in the radial reference direction to maintain the clearance 240 within a specified range of values, where the movement of the shoe 216 is a function of the distribution of pressure within the system 200. The system 200 is shown in a lightly-loaded condition, where the pressure load 250 does not inhibit the performance of the seal.

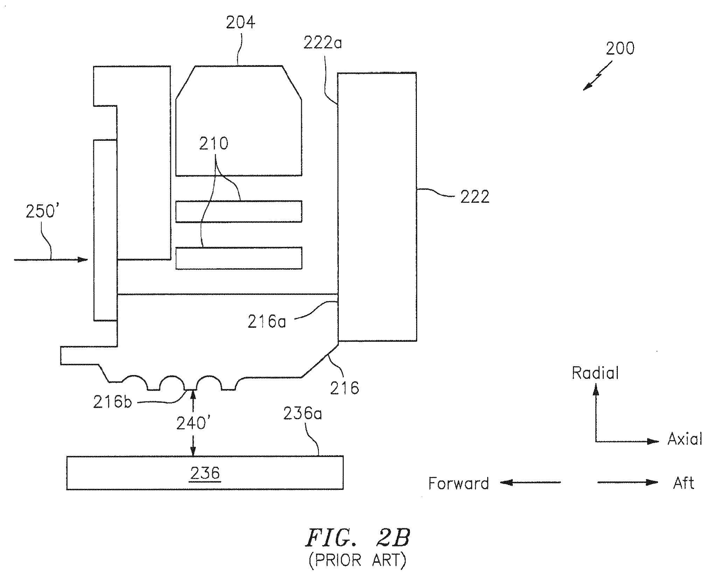

FIG. 2B illustrates the system 200 when subjected to a pressure load 250', where the load 250' is greater than the load 250. As a result of the load 250', the face 216a of the shoe 216 contacts the face 222a of the support structure 222 (e.g., the clearance 230 has a value of zero in FIG. 2B). If the load 250' is larger than a threshold, the result is elevated axial contact loads being transmitted through the seal. The contact loads increase the frictional force between the seal (e.g., the shoe 216) and the support structure 222. If the frictional force is too large, the shoe 216 may be precluded from translating in the radial reference direction (a value of a clearance 240' may be outside of a specified range), thereby adversely impacting the performance of the seal.

US 2016/010480 A1 discloses a prior art seal system as set forth in the preamble of claim 1.

US 2014/117624 A1 and EP 3 009 612 A1 disclose other prior art systems.

BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

According to the present invention, there is provided a seal system as set forth in claim 1.

There is further provided an engine of an aircraft as set forth in claim 2. In some embodiments, the translation of the shoe is configured to adjust a clearance defined between the radial shoe face and the rotor face of the rotor. In some embodiments, the rotation of the shoe is configured to adjust a clearance defined between the radial shoe face and the rotor face of the rotor. In some embodiments, the at least one beam includes at least two beams. In some embodiments, the rounded edge includes a curvature with a parabolic shape or a hyperbolic shape.

BRIEF DESCRIPTION OF THE DRAWINGS

The present disclosure is illustrated by way of example and not limited in the accompanying figures in which like reference numerals indicate similar elements. The drawing figures are not necessarily drawn to scale unless specifically indicated otherwise.

FIG. 1 is a side cutaway illustration of a geared turbine engine.

FIGS. 2A-2B illustrate a prior art sealing system environment.

FIG. 3A illustrates a sealing system environment subjected to a first load in accordance with aspects of this disclosure.

FIG. 3B illustrates the system of FIG. 3A subjected to a second load that causes a translation of a shoe.

FIG. 3C illustrates the system of FIGS. 3A and 3B subjected to a third load that causes a rotation of the shoe.

DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities or a space/gap between the entities that are being coupled to one another.

In accordance with various aspects of the disclosure, apparatuses, systems, and methods are described for separating (a dimension of two or more) beams of a seal from a counterpart/corresponding (dimension of a) shoe of the seal. In some embodiments, a beam may be extended in a given reference direction relative to the shoe (or a flowpath associated therewith) such that the dimension of the beam can be changed without appreciably impacting the aerodynamic design of the shoe. In some embodiments, the seal may include at least some characteristics that are similar to a HALO® seal provided by, e.g., Advanced Technologies Group, Inc. of Stuart, Florida. Such characteristics include the provisioning of one or more floating, non-contact seals.

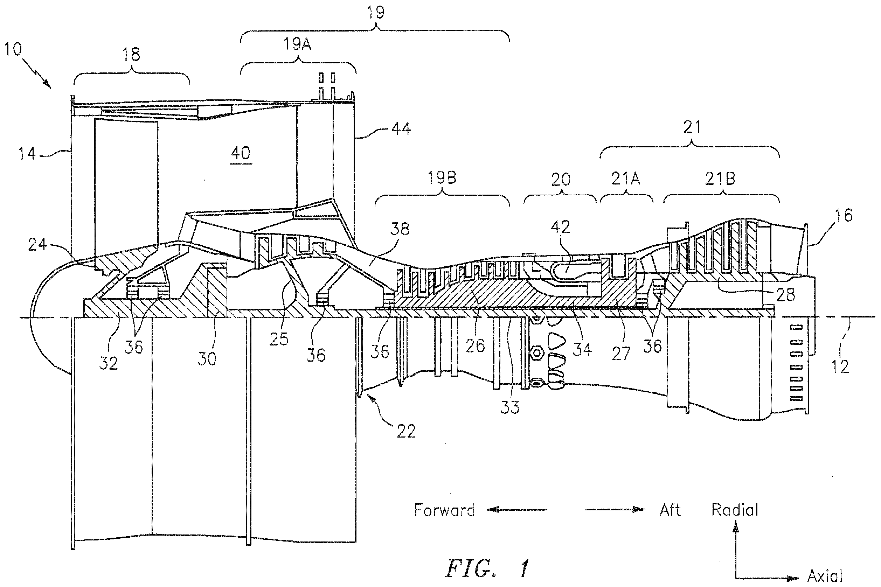

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

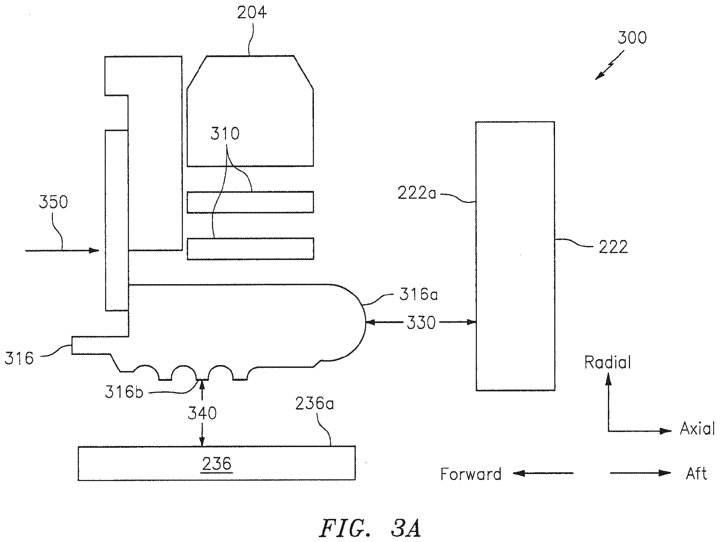

Referring now to FIG. 3A, a sealing system environment 300 is shown. The system 300 may be incorporated as part of one or more sections of an engine, such as for example, the compressor section 19 or the turbine section 21 of the engine 10 (see FIG. 1). The system 300 includes many of the same components of the system 200 described above, and so, a complete re-description of the components that are in common is omitted for the sake of brevity.

In terms of differences between the system 200 and the system 300, the system 300 is shown in FIG. 3A as including beams 310 (which may correspond to beams 210) and a shoe 316 that has a face 316a (also referred to as an axial shoe face). While two beams 310 are shown, any number of beams may be used in some embodiments. For example, in some embodiments a seal with one beam may be provided. Whereas the face 216a of the shoe 216 is shown as being substantially straight/flat, the face 316a is shown as having a rounded edge.

The rounded profile of the edge/face 316a has a radius approximately equal to half a thickness of the shoe 316. The radius may be larger, or smaller, depending on the amount of expected rotation of the shoe 316 and the expected amount of a load 350 applied. A larger radius would distribute forces more evenly than a smaller one. A smaller radius of curvature would provide more rotation without radial translation due to rolling. Other shapes could include a curvature with a nonlinear distribution, e.g., a parabolic shape or hyperbolic shape depending on stress requirements. The curvature may be positioned, e.g., radially such that the forces applied to the shoe 316 are balanced at the desired contact point. The angle of curvature may be greater than 90 degrees. The angle of curvature may be equal to or less than 90 degrees. A contact surface with the curvature (e.g., radius) may be one continuous surface or it may be separated into two or more discreet surfaces. The contact surfaces could be spherical, cylindrical, etc.

As shown in FIG. 3A, an axial clearance 330 is defined between the face 316a and the face 222a. A radial clearance 340 is defined between a face 316b (also referred to as a radial shoe face) of the shoe 316 and the face 236a of the rotor 236. The pressure load 350 (which may correspond to the load 250) may be imposed on the system 300.

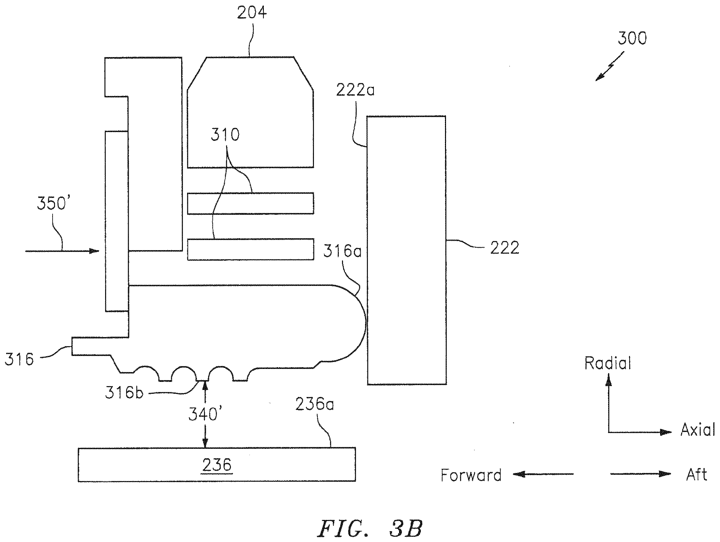

FIG. 3B illustrates the system 300 when subject to a load 350'. The load 350' is different from the load 350; e.g., the load 350' is greater than the load 350. As shown in FIG. 3B, due to the load 350' the face 316a of the shoe 316 contacts the face 222a of the support structure 222 (e.g., the clearance 330 has a value of zero in FIG. 3B). However, unlike the scenario depicted in FIG. 2B, the shoe 316 is not precluded from fully translating in the radial reference direction, such that the clearance 340' may have a value that falls within a specified range. Stated slightly differently, assuming that the loads 250' and 350' are the same value, the value of the clearance 340' may be different from (e.g., less than) the value of the clearance 240'. The ability of the shoe 316 to fully translate in the radial reference direction may be based on the face 316a having a rounded edge. The use of a rounded edge may reduce (e.g., minimize) the surface area of the contact between the shoe 316 and the support structure 222 in the presence of the load 350', thereby reducing (e.g., minimizing) the frictional force that is obtained.

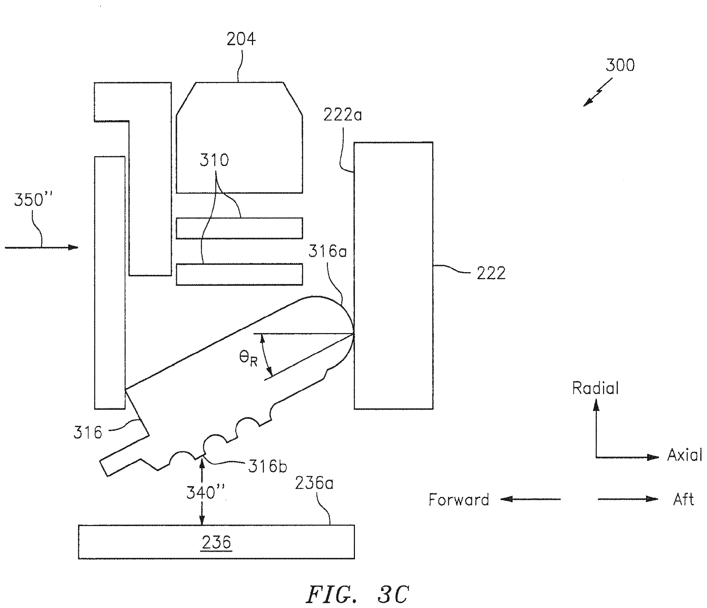

FIG. 3C illustrates the system 300 when subject to a load 350". The load 350" is different from the load 350'; e.g., the load 350" is greater than the load 350'. If the load 350" is sufficiently large (e.g., larger than a threshold), the frictional force that is generated at the interface/contact between the face 316a and the face 222a may be large enough to preclude (further) translational movement of the shoe 316 in the radial reference direction, where the frictional force is operative in a direction that opposes the intended direction of translation. Such a scenario is depicted in FIG. 3C, wherein instead of (further) translating in the radial reference direction the shoe 316 is shown as having pivoted/rotated about the point of contact between the face 316a and the face 222a, providing for a radial clearance 340" between the face 316b and the face 236a. The value of the clearance 340" may be different from (e.g., less than) the value of the clearance 340'.

If the rotation at the point of contact between the face 316a and the face 222a is extended, the motion of the shoe 316 depicted in FIG. 3C at the forward end of the shoe 316 may resemble radial translation. For example, if in the transition from FIG. 3B to FIG. 3C the forward end of the shoe 316 moves 0.02 inches (approximately 0.51 millimeters) towards the rotor 236, and if the shoe 316 is 1.00 inch (25.4 millimeters) long, trigonometry yields an angle of rotation $\theta_R$ (relative to the axial reference direction) of the shoe 316 as:

$$\theta_R = \tan^{-1}(0.020 / 1.00) = 1.15 \text{ degrees}$$

Of course, the values cited above are illustrative. Other values may be used in some embodiments.

Thus, as provided herein a shoe of a seal in accordance with aspects of this disclosure are configured to translate and rotate. The particular movement(s) that is/are obtained may be a function of the design of the seal and/or the pressure loads or pressure distributions that the seal encounters. In this respect, one or more thresholds may form a basis for delineating a particular movement that is obtained.

Technical effects and benefits of this disclosure include a seal with a face that includes a rounded edge. The rounded edge, which is configured to contact/interface to one or more structures, reduces the amount of frictional force between the seal and the structure(s) relative to a seal having a flat/straight edge. This reduction in frictional force allows the seal to translate to a greater extent relative to the seal having the flat/straight edge. If the frictional force is excessive (e.g., is greater than a threshold), the seal (or a portion thereof) is configured to rotate about the rounded edge. The use of a rounded edge may reduce (e.g., minimize) contact stress on the seal as the seal rotates. The use of a rounded edge may reduce (e.g., minimize) degradation to the other structure(s), particularly if the other structure(s) have sharp corners/interfaces.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

**Claims**

1. A seal system (300) for a gas turbine engine that extends along an axial centerline (12), comprising:

   a support structure (222);
   a rotor (236); and
   a floating non-contact seal, the floating non-contact seal comprising:

   a support ring (204);
   at least one beam (310) coupled to the support ring (204); and
   a shoe (316) coupled to the at least one beam (310), the shoe (316) having an axial shoe face (316a), wherein an axial clearance (330) is defined between the axial shoe face (316a) and a support structure face (222a) of the support structure (222) when the seal (300) is subjected to a pressure load below a first threshold, and the axial shoe face (316a) includes a rounded edge that is configured to contact the support structure face (222a) of the support structure (222) when the seal system (300) is subjected to a pressure load (350; 350'; 350") that is equal to or greater than the first threshold, the shoe (316) having a radial shoe face (316b) opposed to a rotor face (236a) of the rotor (236);

**characterised in that**:

the shoe (316) is configured to fully translate relative to the support structure (222) in a radial direction when the pressure load (350; 350'; 350") is greater than the first threshold and less than a second threshold; and
the shoe (316) is configured to rotate about the contact between the rounded edge and the support structure face (222a) instead of translating when the pressure load (350; 350'; 350") is greater than the second threshold.

2. An engine (10) of an aircraft, comprising:

a compressor section (19);
a turbine section (21); and
the seal system (300) of claim 1 incorporated in one of the compressor section (19) or the turbine section (21).

3. The engine (10) of claim 2, wherein the translation of the shoe (316) is configured to adjust a clearance (340; 340'; 340") defined between the radial shoe face (316b) and the rotor face (236a) of the rotor (236).

4. The engine (10) of claim 2 or 3, wherein the rotation of the shoe (316) is configured to adjust a clearance (340; 340'; 340") defined between the radial shoe face (316b) and the rotor face (236a) of the rotor (236).

5. The engine (10) of any of claims 2 to 4, wherein the at least one beam (310) includes at least two beams (310).

6. The engine (10) of any of claims 2 to 5, wherein the rounded edge includes a curvature with a parabolic shape or a hyperbolic shape.

7. The seal system (300) or engine (10) of any preceding claim, wherein the support structure (222) is axially aft of the shoe (316).

**Patentansprüche**

1. Abdichtungssystem (300) für ein Gasturbinentriebwerk, das sich entlang einer axialen Mittellinie (12) erstreckt, umfassend:

eine Stützstruktur (222);
einen Rotor (236); und
eine schwimmende, kontaktfreie Abdichtung, wobei die schwimmende, kontaktfreie Abdichtung Folgendes umfasst:

einen Stützring (204);
mindestens einen Balken (310), der an den Stützring (204) gekoppelt ist; und
einen Klotz (316), der an den mindestens einen Balken (310) gekoppelt ist, wobei der Klotz (316) eine axiale Klotzfläche (316a) aufweist, wobei ein axialer Abstand (330) zwischen der axialen Klotzfläche (316a) und einer Stützstrukturfläche (222a) der Stützstruktur (222) definiert ist, wenn die Abdichtung (300) einer Drucklast unter einem ersten Schwellenwert ausgesetzt wird, und wobei die axiale Klotzfläche (316a) eine abgerundete Kante beinhaltet, die dazu konfiguriert ist, die Stützstrukturfläche (222a) der Stützstruktur (222) zu berühren, wenn das Abdichtungssystem (300) einer Drucklast (350; 350'; 350") ausgesetzt ist, die gleich dem ersten Schwellenwert oder größer ist, wobei der Klotz (316) eine radiale Klotzfläche (316b) gegenüber einer Rotorfläche (236a) des Rotors (236) aufweist;
**dadurch gekennzeichnet, dass**:

der Klotz (316) dazu konfiguriert ist, sich bezüglich der Stützstruktur (222) vollständig in eine radiale Richtung zu übertragen, wenn die Drucklast (350; 350'; 350") größer als der erste Schwellenwert und geringer als ein zweiter Schwellenwert ist; und
wobei der Schuh (316) dazu konfiguriert ist, sich um den Kontakt zwischen der abgerundeten Kante und der Stützstrukturfläche (222a) zu drehen, anstatt zu übersetzen, wenn die Drucklast (350; 350'; 350") größer ist als der zweite Schwellenwert.

2. Triebwerk (10) eines Luftfahrzeugs, das Folgendes umfasst:

einen Verdichterabschnitt (19);

einen Turbinenabschnitt (21); und

das Abdichtungssystem (300) nach Anspruch 1, das in einem von dem Verdichterabschnitt (19) oder dem Turbinenabschnitt (21) aufgenommen ist.

3. Triebwerk (10) nach Anspruch 2, wobei das Übertragen des Klotzes (316) dazu konfiguriert ist, einen Abstand (340; 340'; 340") anzupassen, der zwischen der radialen Klotzfläche (316b) und der Rotorfläche (236a) des Rotors (236) definiert ist.

4. Triebwerk (10) nach Anspruch 2 oder 3, wobei die Rotation des Klotzes (316) dazu konfiguriert ist, einen Abstand (340; 340'; 340") anzupassen, der zwischen der radialen Klotzfläche (316b) und der Rotorfläche (236a) des Rotors (236) definiert ist.

5. Triebwerk (10) nach einem der Ansprüche 2 bis 4, wobei der mindestens eine Balken (310) mindestens zwei Balken (310) beinhaltet.

6. Triebwerk (10) nach einem der Ansprüche 2 bis 5, wobei die abgerundete Kante eine Krümmung mit parabolischer Form oder hyperbolischer Form beinhaltet.

7. Abdichtungssystem (300) oder Triebwerk (10) nach einem der vorhergehenden Ansprüche, wobei sich die Stützstruktur (222) axial hinter dem Klotz (316) befindet.

**Revendications**

1. Système de joint d'étanchéité (300) d'un moteur à turbine à gaz qui s'étend le long d'une ligne médiane axiale (12), comprenant :

une structure de soutien (222) ;

un rotor (236) ; et

un joint d'étanchéité flottant sans contact, le joint d'étanchéité flottant sans contact comprenant :

un anneau de soutien (204) ;

au moins une poutre (310) couplée à l'anneau de soutien (204) ; et

un sabot (316) couplé à l'au moins une poutre (310), le sabot (316) ayant une face axiale de sabot (316a), dans lequel un jeu axial (330) est défini entre la face axiale de sabot (316a) et un face de structure de soutien (222a) de la structure de soutien (222) lorsque le joint d'étanchéité (300) est soumis à une charge de pression inférieure à un premier seuil, et la face axiale de sabot (316a) comprend un bord arrondi qui est configuré pour entrer en contact avec la face de structure de soutien (222a) de la structure de soutien (222) lorsque le système de joint d'étanchéité (300) est soumis à une charge de pression (350 ; 350' ; 350") qui est supérieure ou égale au premier seuil, le sabot (316) ayant une face radiale de sabot (316b) opposée à une face de rotor (236a) du rotor (236) ;

**caractérisé en ce que** :

le sabot (316) est configuré pour effectuer une translation complète par rapport à la structure de soutien (222) dans une direction radiale lorsque la charge de pression (350 ; 350' ; 350") est supérieure au premier seuil et inférieure à un second seuil ; et

le sabot (316) est configuré pour tourner autour du contact entre le bord arrondi et la face de structure de support (222a) au lieu d'effectuer une translation lorsque la charge de pression (350 ; 350' ; 350") est supérieure au second seuil.

2. Moteur (10) d'un aéronef, comprenant :

une section de compresseur (19) ;

une section de turbine (21) ; et

le système de joint d'étanchéité (300) selon la revendication 1 intégré à l'une de la section de compresseur (19) ou de la section de turbine (21).

3. Moteur (10) selon la revendication 2, dans lequel la translation du sabot (316) est configurée pour régler un jeu (340 ; 340' ; 340") défini entre la face radiale de sabot (316b) et la face de rotor (236a) du rotor (236).

4. Moteur (10) selon la revendication 2 ou 3, dans lequel la rotation du sabot (316) est configurée pour régler un jeu (340 ; 340' ; 340") défini entre la face radiale de sabot (316b) et la face de rotor (236a) du rotor (236).

5. Moteur (10) selon l'une quelconque des revendications 2 à 4, dans lequel l'au moins une poutre (310) comprend au moins deux poutres (310).

6. Moteur (10) selon l'une quelconque des revendications 2 à 5, dans lequel le bord arrondi comprend une courbure avec une forme parabolique ou une forme hyperbolique.

7. Système de joint d'étanchéité (300) ou moteur (10) selon une quelconque revendication précédente, dans lequel la structure de soutien (222) est axialement à l'arrière du sabot (316).

FIG. 1

EP 3 239 471 B1

*FIG. 2A*
(PRIOR ART)

EP 3 239 471 B1

204

222a

200

210

250'

222

216a

216

216b

240'

236a

236

Radial

Axial

Forward ⟵           ⟶ Aft

*FIG. 2B*
(PRIOR ART)

FIG. 3A

*FIG. 3B*

FIG. 3C

**EP 3 239 471 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2016010480 A1
- US 2014117624 A1
- EP 3009612 A1